(19) Europäisches Patentamt / European Patent Office / Office européen des brevets

(11) **EP 2 850 042 B1**

(12) **FASCICULE DE BREVET EUROPEEN**

(45) Date de publication et mention de la délivrance du brevet:
**23.03.2016 Bulletin 2016/12**

(21) Numéro de dépôt: **13727282.9**

(22) Date de dépôt: **13.05.2013**

(51) Int Cl.:
*C04B 28/06* [(2006.01)]  *C09K 17/10* [(2006.01)]
*E01C 23/10* [(2006.01)]  *B09C 1/08* [(2006.01)]
*B09C 1/00* [(2006.01)]

(86) Numéro de dépôt international:
**PCT/FR2013/051044**

(87) Numéro de publication internationale:
**WO 2013/171418 (21.11.2013 Gazette 2013/47)**

(54) **PROCEDE DE TRAITEMENT DE SOLS POLLUES, AU MOYEN D'UN LIANT HYDRAULIQUE A BASE DE CLINKER SULFO-ALUMINEUX ET SON UTILISATION POUR LA STABILISATION DE SOLS POLLUES**

VERFAHREN ZUR BEHANDLUNG VERUNREINIGTER BÖDEN MITTELS EINES AUF EINEM SULFOALUMINATKLINKER BASIERENDEN HYDRAULISCHEN BINDEMITTELS UND VERWENDUNG DAVON ZUR STABILISIERUNG VERUNREINIGTER BÖDEN

PROCESS FOR TREATING POLLUTED SOILS BY MEANS OF A SULFOALUMINATE CLINKER BASED HYDRAULIC BINDER AND USE THEREOF FOR STABILIZING POLLUTED SOILS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.05.2012 FR 1254393**

(43) Date de publication de la demande:
**25.03.2015 Bulletin 2015/13**

(73) Titulaire: **Ciments Français**
**92800 Puteaux (FR)**

(72) Inventeurs:
• **MOUDILOU, Emmanuel**
**F-27640 Breuilpont (FR)**
• **GUERANDEL, Cyril**
**F-75018 Paris (FR)**
• **LE ROLLAND, Bruno**
**F-78250 Oinville sur Montcient (FR)**
• **DELAIR, Stéphanie**
**F-78300 Poissy (FR)**

(74) Mandataire: **Le Cloirec, Claudine et al**
**Ipsilon Brema-Loyer**
**3, rue Edouard Nignon**
**44300 Nantes (FR)**

(56) Documents cités:
EP-A1- 0 900 771    WO-A1-2010/043495
FR-A1- 2 796 934    FR-A1- 2 807 424
FR-A1- 2 841 897    FR-A1- 2 901 270
FR-A1- 2 960 872

• BERARDI R ET AL: "Matrix stability and leaching behaviour in ettringite-based stabilization systems doped with heavy metals", WASTE MANAGEMENT, ELSEVIER, NEW YORK, NY, US, vol. 17, no. 8, 8 janvier 1997 (1997-01-08), pages 535-540, XP004123441, ISSN: 0956-053X, DOI: 10.1016/S0956-053X(97)10061-7

**Description**

La présente invention concerne un procédé de traitement de sol pollué au moyen d'un liant hydraulique, et son utilisation dans le cadre du traitement de sols pollués.

La présente invention a pour objet un liant hydraulique contenant des phases minéralogiques le plaçant dans la catégorie des liants sulfo-alumineux. La présente invention a également pour objet l'utilisation de ce liant pour le traitement d'un matériau, notamment d'un sol ou d'une terre, polluée ou contaminée par des espèces chimiques ioniques ou des métaux lourds. Le matériau traité reste meuble mais la lixiviation des espèces polluantes est réduite.

La mise en décharge de sols contaminés par des agents polluants, notamment des sols provenant de sites industriels, obéit à une réglementation stricte (Directive 1999/31/CE du Conseil du 26 avril 1999 et Décision n° 2003/33/CE du 19/12/02). Les modalités de mise en décharge de ces sols sont déterminées selon leurs classes de pollution. Ces classes vont de la classe I (déchets dangereux) à la classe III (déchets inertes). Plus un sol est considéré comme dangereux, plus sa mise en décharge entraine des contraintes et en conséquence un coût élevé. Afin de pouvoir stocker en décharge ces sols contaminés, au moindre coût, il convient d'en abaisser la classe de dangerosité. Cette modification de la classe de dangerosité peut en particulier être obtenue en abaissant le taux d'agents polluants lixiviables contenus dans le sol.

Abaisser la classe de dangerosité peut également permettre de réemployer les sols ainsi traités, par exemple dans des sous couches routières ou dans des remblais (en accord avec le guide SETRA "Acceptabilité de matériaux alternatifs en technique routière. Evaluation environnementale". Mars 2011).

Dans le langage cimentier, les composés primaires sont représentés par C pour CaO, S pour $SiO_2$, A pour $Al_2O_3$, \$ pour $SO_3$, H pour $H_2O$, T pour $TiO_2$, F pour $Fe_2O_3$, qui seront utilisés dans l'ensemble du présent texte.

Des liants hydrauliques sont déjà utilisés pour le traitement d'effluents industriels (déchets liquides) et de résidus d'incinération sous une forme finement divisée, notamment pour piéger certains anions.

C'est le cas notamment des liants hydrauliques commercialisés par la société Kerneos sous le nom commercial LSR et décrits dans le brevet européen EP 0 588 689 qui sont des ciments alumineux. Les phases minéralogiques majoritaires de ces ciments alumineux sont CA ou CA et $C_{12}A_7$ ou $C_3A$ et $C_{12}A_7$.

Les déchets finement divisés sont d'abord traités avec un liant alumineux contenant trois phases majoritaires $C_3A$, $C_{12}A_7$ et CaO. Le produit traité ainsi obtenu est ensuite concassé et les granulats sont enrobés dans un ciment de type Portland pour améliorer leur résistance à la lixiviation. Ce procédé nécessite donc une quantité importante de liant d'enrobage. En outre le brevet divulgue la teneur finale en chlorures du lixiviat après 28 jours de durcissement, mais ne donne aucune information sur la teneur en ions sulfate. Deux types de liants alumineux sont décrits comprenant les phases respectives $C_3A/C_{12}A_7/CaO$ en proportions 20/80/0 et 80/0/20. Aucune référence n'est faite à une phase $C_4A_3\$$.

On connait également des procédés d'inertage et de traitement de sols pollués au moyen de liants hydrauliques commercialisés par la société Holcim sous le nom commercial Inercem. Ces liants sont des mélanges de clinker (Portland) et de laitier de haut fourneau. Les différents produits sont : Inercem P (plus de 65% de clinker et moins de 20% de laitier), Inercem S (plus de 80% de laitier et plus de 10% de clinker), et Inercem à mi chemin entre les deux produits précédents (moins de 30% de clinker et plus de 60% de laitier). Ces produits sont décrits dans la brochure commerciale : « Inercem Liants hydrauliques pour stabilisation des déchets courants », (Holcim Belgique, février 2009).

Il apparaît que ces liants ne sont pas suffisamment efficaces pour piéger les ions sulfate lorsque le sol à traiter est pollué par de tels anions facilement lixiviables qui sont relargués dans les eaux de pluie ou d'infiltration.

On connaît de WO 2010/043495 un procédé de traitement de sédiments marins à forte teneur en eau à l'aide d'un liant à base de clinker sulfoalumineux permettant de rendre manipulables rapidement des sédiments marins sans utiliser de chaux vive. La réaction dudit liant avec les sédiments provoque leur assèchement rapide (changement de texture) et fait prise en vue d'un stockage à long terme des sédiments traités.

Un premier but de l'invention est donc de proposer un liant hydraulique apte à piéger les anions tels que les ions sulfate et/ou les métaux lourds présents dans des matériaux contaminés, notamment des sols pollués, et à limiter leur lixiviation.

Un autre but de l'invention est de proposer un liant hydraulique permettant le traitement et l'inertage d'un sol pollué en une seule étape et *in situ,* c'est-à-dire ne nécessitant pas le transfert sur un autre lieu.

Un autre but de l'invention est donc de proposer un procédé de traitement d'un sol pollué par addition de liant hydraulique en quantité faible, permettant de diminuer le coût du traitement par rapport aux liants et aux procédés de mise en oeuvre de l'art antérieur.

Encore un but de l'invention est de proposer un procédé de traitement et d'inertage d'un sol pollué avant sa mise en décharge.

A cet effet, la présente invention propose un procédé de traitement de sols pollués, notamment de sols présentant une fraction lixiviable supérieure à 0,4%, ladite fraction lixiviable renfermant majoritairement des anions, notamment des ions sulfate, et/ou des métaux lourds, caractérisé en ce qu'il comprend le mélange dudit sol avec un liant hydraulique à base de clinker sulfoalumineux, dans des proportions massiques sol/liant comprises entre 1 et 40 parties de liant pour 100 parties de sol, ledit clinker sulfoalumineux renfermant plus de 50% massique de phase Yeelimite $C_4A_3\$$, moins de 15%, notamment de 5% à moins de 15% massique de phase Bélite $C_2S$, et de 1 à 5% massique de chaux libre CaO.

Le procédé de traitement du sol avec ledit liant hydraulique permet de créer des espèces chimiques stables, notamment de l'ettringite, au sein du sol pollué.

Le sol ainsi traité reste facilement manipulable (pelletable, transportable). Le traitement ne nécessite pas de manipulations lourdes d'un point de vue logistique ; c'est-à-dire qu'il ne nécessite pas de transport de grand volume de matériaux (sol ou liant), pas d'infrastructures spéciales. Le traitement proposé est simple à mettre en oeuvre, économiquement avantageux et écologiquement intéressant.

Le procédé de la présente invention est particulièrement adapté au traitement d'un sol renfermant une teneur en eau inférieure à 40%, notamment inférieure à 30%, préférentiellement inférieure à 20% massique.

De préférence, dans le liant hydraulique mis en oeuvre selon le procédé de la présente invention, le clinker sulfo-alumineux renferme plus de 60% massique de phase Yeelimite $C_4A_3\$$.

Selon un mode de réalisation avantageux, ledit clinker sulfo-alumineux renferme de 5% à moins de 15%, de préférence de 8 à 13% massique de phase Bélite C2S.

Selon un mode de réalisation avantageux, le clinker sulfo-alumineux renferme de 2 à 12%, préférentiellement de 2 à 3% massique de phase Mayenite $C_{12}A_7$, ou d'un isotype de Mayenite.

Dans le cadre de la présente invention la phase $C_{12}A_7$ englobe toute structure isotype de $C_{12}A_7$, comme par exemple $C_{11}A_7$. $CaF_2$ dont la structure résulte d'une substitution d'ions $O^{2-}$ par des ions F$^-$. Dans la suite de la description, par $C_{12}A_7$, il faut comprendre $C_{12}A_7$ ou toute structure isotype notamment $C_{11}A_7$. $CaF_2$ et $C_{11}A_7$. $CaCl_2$.

De manière triviale, le clinker sulfo-alumineux selon la présente invention peut être obtenu par cuisson de minéraux dans un four de cimenterie ; mais il peut également être obtenu par mélange de différentes sources de clinker, voire même par ajout de phases minéralogiques pures à un clinker sulfoalumineux industriel afin de l'enrichir en phases minéralogiques, notamment en Yeelimite et en Mayenite.

Le procédé de traitement selon l'invention comprend avantageusement le mélange dudit sol avec le liant hydraulique, dans des proportions massiques sol/liant comprises entre 1 et 20 parties, de préférence de 2 à 20 parties, de liant pour 100 parties de sol, de préférence encore le mélange dudit sol avec le liant hydraulique, dans des proportions massiques sol/liant comprises entre 5 et 20 parties, encore préférentiellement entre 5 et 10 parties de liant pour 100 parties de sol.

Avantageusement ledit liant hydraulique ne renferme pas d'accélérateur de prise.

Selon un premier mode de réalisation de l'invention, le liant hydraulique est avantageusement constitué d'un clinker sulfo-alumineux renfermant plus de 50% massique de phase Yeelimite $C_4A_3\$$, moins de 15%, de préférence de 5% à moins de 15% massique de phase Bélite $C_2S$, et de 1 à 5% massique de chaux libre CaO.

Selon un second mode de réalisation de l'invention le liant hydraulique renferme au moins 20%, de préférence au moins 30%, massique dudit clinker sulfoalumineux et un ou plusieurs composés choisis parmi du ciment, du clinker Portland, de la chaux, notamment de la chaux vive, un filler (composé inerte chimiquement), des additions à effet pouzzolanique (ayant un rôle dans le développement des résistances à long terme) telles que du laitier, de la cendre volante, de la fumée de silice ou de la pouzzolane, et éventuellement un ou plusieurs adjuvants, tel qu'un accélérateur de prise ou un réducteur de Chrome.

Avantageusement le liant hydraulique renferme de la chaux vive, notamment en une quantité inférieure à 50%, de préférence de 5 à 40 %, encore préférentiellement de 10 à 20 % massique de chaux.

Le procédé selon la présente invention peut avantageusement être utilisé pour la stabilisation de sols in situ ou avant mise en décharge, de sols pollués notamment par des anions sulfate et/ou des cations de métaux lourds.

Le sol ainsi traité par le procédé de l'invention peut trouver une utilisation intéressante dans des sous-couches routières ou des remblais.

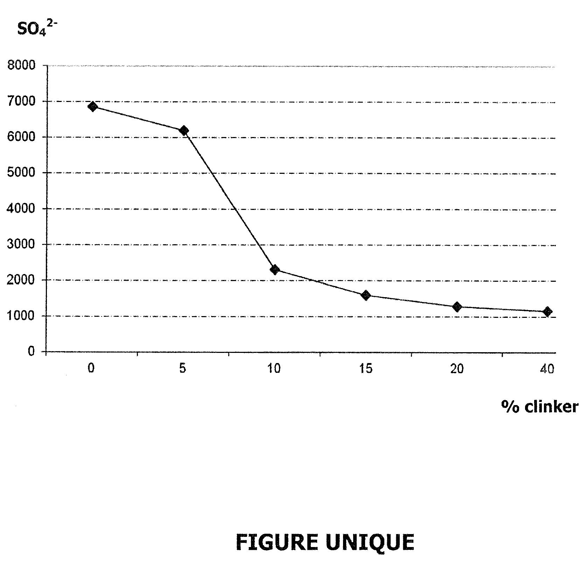

L'invention va être décrite plus en détail dans les exemples non limitatifs ci-après , en référence à la figure unique annexée, dans laquelle le graphique représente la variation de teneur en ions sulfates dans le lixiviat d'un sol contaminé en fonction de la quantité de liant hydraulique selon l'invention utilisé pour traiter ledit sol.

**EXEMPLES**

**1- Préparation des clinkers**

Les clinkers, selon la présente invention, sont préparés par cuisson à une température comprise entre 1000°C et 1200°C d'un cru composé de calcaire, argile et bauxite qui sont des mélanges de différents oxydes, notamment CaO, $SiO_2$, $Al_2O_3$, $Fe_3O_2$ et $SO_3$, selon la demande de brevet PCT/EP2011/070116 non encore publiée.

Il est important de noter que dans le cadre de la présente invention, les matières premières constituant le cru (mélange des minéraux avant cuisson) sont dosées pour obtenir un liant sulfo-alumineux et non pas un liant alumineux.

Après cuisson, le clinker est refroidi à l'air ambiant, puis broyé pour obtenir une finesse Blaine de l'ordre de 4000 cm2/g et une granulométrie inférieure à 40 micromètres environ. Les compositions minéralogiques de deux clinkers sulfo-alumineux selon l'invention sont présentées dans le Tableau 1.

Tableau 1

|  | Clinker A | Clinker C |
|---|---|---|
| $C_4A_3\$$ | 63,3 | 61,4 |
| $C_2S$ | 11 | 11,2 |
| $C\$$ | 3,1 | 8,7 |
| $C_9S_3\$_3.CaF_2$ | 11,4 | <0,5 |
| $C_{12}A_7$ | 2,6 | <0,5 |
| $C_3S$ | <0,5 | 4,1 |
| $C_2AS$ | <0,5 | 2,9 |
| $C_4AF$ | 2,3 | 4,1 |
| CT | 1 | 3,3 |
| $K_2SO_4$ | <0,5 | 2,1 |
| MgO | 5,2 | <0,5 |
| $C_3A$ | <0,5 | 1,7 |
| C | <0,5 | <0,5 |
| CH | <0,5 | 0,6 |
| (dans ce tableau 1, $CaF_2$ représente de la fluorine) | | |

## 2- Procédé de traitement

Le procédé de traitement d'un matériau contaminé (tel qu'un sol pollué), par un liant hydraulique à base de clinker sulfo-alumineux selon l'invention a été mis en oeuvre selon les étapes suivantes :

Une quantité de terre brute est tamisée à 4 mm (Tamis Saulas, France, certifié NF ISO 3310) de manière à obtenir 1 kg de terre à traiter (matériau contaminé).

1 kg de terre tamisée à traiter (matériau contaminé) est placé dans un malaxeur (MLX40D, CAD France) en présence d'une quantité de liant hydraulique sulfo-alumineux déterminée, exprimée en % massique de liant par rapport à la masse de matériau contaminé.

Le mélange terre/liant subit alors une étape d'homogénéisation par mélange à vitesse faible (140 tours/minute) pendant 1 minute. Puis l'eau est ajoutée selon un rapport massique eau/ liant égal à 1.

L'ensemble est alors mélangé à vitesse lente pendant 2 minutes puis 2 minutes à vitesse rapide (285 tours/minute). L'ensemble du contenu du malaxeur est alors déversé dans un sac plastique (sac en Polyéthylène, 3 litres) puis fermé hermétiquement de manière à simuler un stockage en tas. La maturation de la terre traitée est réalisée sur une durée de 1 semaine à température ambiante.

Le matériau traité est ensuite séché à 40°C à l'étuve puis éventuellement concassé (BB 200 Wolframcarbid, RETSCH Allemagne) à une granulométrie inférieure à 4 mm pour réaliser les essais de lixiviation.

## 3- Procédé de Lixiviation

Conformément à la Directive précitée qui définit les classes de dangerosité, la norme NF EN-12457-2 a été utilisée pour les tests de lixiviation.

Les essais sont effectués sur un matériau dont au moins 95% des particules (en masse) ont une taille inférieure au tamis de 4 mm.

Un échantillon de 350 g de matériau brut est tamisé au tamis de 4 mm. Le refus à 4 mm est soumis à un concassage pour obtenir un refus nul à ce tamis, et l'ensemble est mélangé pour obtenir l'échantillon qui va être soumis au test de lixiviation.

Pour les analyses et les tests de lixiviation, la masse de matière sèche ($m_s$) de l'échantillon est déterminée après passage à l'étuve à 105°C $\pm$5C jusqu'à poids constant conformément à la norme ISO 11465.

Test de Lixiviation

La prise d'essai de départ $m_{lixi}$ est de 90 g $\pm$ 0,5 g (mesurée avec une précision de 0,1 g) de matière sèche.

L'essai de lixiviation est réalisé à température ambiante soit 20°C $\pm$ 5°C, dans un flacon d'un litre en présence d'une quantité de lixiviant (eau désionisée, 18 MΩ) équivalente à un rapport massique liquide-solide (L/S) de 10 $\pm$ 2%. Le flacon bouché est placé dans un dispositif d'agitation à retournement tournant (*Heidolph REAX 20*) à environ 10 tr/min et agité pendant 24 heures $\pm$ 0,5 h.

En plus des échantillons, des "blancs" de lixiviation sont également effectués.

Après arrêt de l'agitation, les solides en suspension sont laissés décanter pendant 15 min $\pm$ 5min, puis filtrés sous vide sur un filtre à membrane de 0,45 $\mu$m.

L'éluât est ensuite divisé en un nombre approprié de sous échantillons pour les différentes analyses chimiques et conservé selon la norme EN ISO 5667-3.

L'analyse des éléments (métaux lourds) est réalisée par analyse ICP-AES (Spectrométrie d'émission atomique couplée à un plasma induit) (*Iris advantage, Thermo Jarrell Ash*), selon un protocole conforme à la norme NF EN ISO 11885.

L'analyse des anions est réalisée par chromatographie ionique (ICS 2000 Dionex, USA) selon un mode opératoire conforme à la norme NF EN ISO 10304-1.

La fraction soluble (FS) est calculée selon l'équation suivante :

$$ Fs = \frac{\left[ (m_1 - m_0)(0,9 + (0,001 \cdot m_{lixi} \cdot t_{humidité})) \right]}{(0,001 \cdot V_{ext} \cdot m_{lixi} \cdot (1 - t_{humidité}))} $$

$m_1 - m_0 = m_s$ = Masse de l'échantillon séché à l'étuve à 105°C (en gramme)
$m_{lixi}$ = Masse de la prise d'essai pour lixiviation (en gramme)
$t_{humidité}$ = Taux d'humidité de l'échantillon (en gramme)
$V_{ext}$ = Volume prélevé pour mesure de l'extrait sec (en millilitre)

Dans la suite du document, FS est exprimée en %. Dans les directives précitées FS est exprimée en mg/kg. La valeur de 1% équivaut à 10 000 mg/kg.

**Echantillons de référence**

Tous les essais réalisés ici ont été effectués à partir de terre du Port autonome de Paris, terre excavée d'un ancien site industriel où était en activité une usine d'incinération à Issy-les-Moulineaux près de Paris.

La terre du port de Paris constitue un sol pollué, appelé encore matériau contaminé au sens de la présente invention, le substrat étant la terre, et les agents polluants étant les différents éléments ou ions présents en quantités importantes dans cette terre.

**Echantillon 1**

L'échantillon 1 est un échantillon brut de terre du port autonome de Paris. Cet échantillon 1 n'a pas subi de lixiviation. Sa teneur en eau est d'environ 15% massique.

**Echantillons 2 et 3**

Les échantillons 2 et 3 correspondent à l'analyse de deux lixiviats de terre du port de Paris.

Les dosages des différents agents polluants présents dans l'échantillon 1 brut et sur les lixiviats (échantillon 2 et 3) sont regroupés dans le tableau 2.

Les valeurs des éléments et ions dosés sont exprimées en mg/kg de matière sèche.

La fraction soluble représente la quantité totale d'éléments chimiques passant en solution par rapport à la quantité de matériau sec initial, exprimé en % de matière sèche.

Tableau 2

| | Echantillon 1 (terre brute) | Echantillon 2 (lixiviat) | Echantillon 3 (lixiviat) |
|---|---|---|---|
| As | 53 | <0,2 | <0,2 |
| Ba | 769 | 0,471 | 0,34 |
| Cd | 5 | 0,114 | <0,1 |
| Cu | 798 | 0,253 | <0,2 |
| Hg | <3 | <0,1 | <0,002 |
| Ni | 107 | 0,127 | <0,100 |
| Pb | 1454 | 0,115 | <0,350 |
| Sb | 47 | <0,2 | <0,500 |
| Se | <5 | <0,2 | <0,400 |
| Zn | 1163 | 0,375 | <0,200 |
| $Cl^-$ | 68,7 | 68,7 | 24 |
| $SO_4^{2-}$ | 9 400 | 6 859 | 7532 |
| FS (Fraction soluble) | - | 1,18 | 1,2 |

Les résultats de ce tableau 2 montrent que les principaux éléments lixiviables, et donc constituant des agents polluants sont les anions, notamment les sulfates. Les teneurs en sulfates lixiviés ont pour conséquence de faire passer la terre en classe II selon la Directive 1999/31/CE du Conseil du 26 avril 1999 pour sa mise en décharge. La valeur de la fraction soluble (comprise entre 0,4% et 6,0%) induit également un classement en catégorie II.

L'échantillon 2 est sélectionné dans les exemples ci-après comme référence pour mesurer l'efficacité des différents liants.

### Exemple 1

### Echantillon 4

L'échantillon 4 correspond au traitement d'un échantillon de terre du port de Paris avec 10% (en masse) d'un liant hydraulique sulfo-alumineux selon l'invention. La quantité d'eau utilisée dans la réalisation de cet échantillon correspond à un rapport Eau / Liant égal à 1.

### Exemple 2 (comparatif)

### Echantillon 5

L'échantillon 5 correspond au traitement d'un échantillon de terre du port de Paris avec 10% (en masse) d'un liant commercialisé par la société Holcim sous le nom commercial Inercem. La quantité d'eau utilisée dans la réalisation de cet échantillon correspond à un rapport Eau / Liant égal à 1.

### Exemple 3 (comparatif)

### Echantillon 6

L'échantillon 6 correspond au traitement d'un échantillon de terre du port de Paris avec 20% en masse d'un liant commercialisé par la société Ciment Calcia sous le nom commercial Ligex FPL1. La quantité d'eau utilisée dans la réalisation de cet échantillon correspond à un rapport Eau / Liant égal à 1.

L'ensemble de ces résultats sont regroupés dans le tableau 3.

6

Tableau 3

|  | Echantillon 2 (référence) | Echantillon 4 (10% liant) | Echantillon 5 (comparatif) | Echantillon 6 (comparatif) |
|---|---|---|---|---|
| As | <0,2 | <0,3 | <0,3 | <0,2 |
| Ba | 0,471 | 0,698 | 0,425 | 0,986 |
| Cd | 0,114 | <0,1 | <0,1 | <0,1 |
| Cu | 0,253 | 0,263 | <0,2 | 0,269 |
| Hg | <0,1 | <0,1 | <0,1 | <0,1 |
| Ni | 0,127 | <0,1 | <0,1 | <0,1 |
| Pb | 0,115 | <0,35 | <0,35 | <0,1 |
| Sb | <0,2 | <0,5 | <0,5 | <0,2 |
| Se | <0,2 | <0,4 | <0,4 | <0,2 |
| Zn | 0,375 | <0,2 | <0,2 | 0,317 |
| Cl- | 68,7 | 311 | 59 | 99 |
| $SO_4^{2-}$ | 6 859 | 2305 | 8968 | 4322 |
| FS % | 1,18 | 0,6 | 1,32 | 0,96 |

On observe que le traitement avec le liant Inercem ne permet pas d'abaisser la quantité de sulfate entrainée dans le lixiviat, contrairement au traitement avec un liant hydraulique sulfo-alumineux selon l'invention qui permet, avec une faible quantité de liant hydraulique (10% massique) de réduire de plus de 60% la teneur en sulfates dans le lixiviat. Le traitement avec le liant Ligex FPL1 permet de diminuer la quantité de sulfate mais dans une proportion plus faible que le traitement avec un liant hydraulique sulfo-alumineux selon l'invention.

On observe également que l'utilisation d'INERCEM ne permet pas de diminuer la fraction soluble de la terre, contrairement au liant hydraulique sulfoalumineux selon l'invention. Le traitement au Ligex FPL1 permet de réduire la fraction soluble mais de manière moins efficace que le liant hydraulique sulfoalumineux.

**Exemple 4 : traitement avec différentes proportions de liant**

Les échantillons 7, 8, 9 et 10 correspondent au traitement d'un échantillon de terre du port de Paris respectivement avec 5%, 15%, 20% et 40% (en masse) d'un liant hydraulique sulfo-alumineux selon l'invention renfermant 100% de clinker A. La quantité d'eau utilisée dans la réalisation de cet échantillon correspond à un rapport Eau / Liant égal à 1. Les résultats sont présentés dans le tableau 4.

Tableau 4

|  | Ech. 2 (référence) | Ech. 7 (5%liant) | Ech. 4 (10%liant) | Ech. 8 (15%liant) | Ech. 9 (20%liant) | Ech. 10 (40%liant ) |
|---|---|---|---|---|---|---|
| As | <0,2 | <0,3 | <0,3 | <0,3 | <0,2 | <0,3 |
| Ba | 0,471 | 0,467 | 0,698 | 0,811 | 1,2 | 0,623 |
| Cd | 0,114 | <0,1 | <0,1 | <0,1 | <0,1 | <0,1 |
| Cu | 0,253 | <0,2 | 0,263 | 0,508 | 0,367 | 0,431 |
| Hg | <0,1 | <0,001 | <0,1 | <0,001 | <0,002 | <0,001 |
| Ni | 0,127 | <0,1 | <0,1 | <0,1 | <0,100 | <0,1 |
| Pb | 0,115 | <0,350 | <0,35 | <0,350 | <0,350 | <0,350 |
| Sb | <0,2 | <0,5 | <0,5 | <0,5 | <0,500 | <0,5 |
| Se | <0,2 | <0,4 | <0,4 | <0,4 | <0,400 | <0,4 |
| Zn | 0,375 | <0,2 | <0,2 | <0,2 | <0,200 | <0,2 |
| Cl- | 68,7 | 191 | 311 | 366 | 384 | 575 |

(suite)

|  | Ech. 2 (référence) | Ech. 7 (5%liant) | Ech. 4 (10%liant) | Ech. 8 (15%liant) | Ech. 9 (20%liant) | Ech. 10 (40%liant ) |
|---|---|---|---|---|---|---|
| $SO_4^{2-}$ | 6859 | 6200 | 2305 | 1606 | 1 287 | 1 158 |
| FS | 1,18 | 0,99 | 0,6 | 0,66 | 0,81 | 1,05 |

On observe que la stabilisation des sulfates de la terre est fonction de la quantité de liant hydraulique sulfoalumineux selon l'invention utilisée. L'évolution des concentrations des sulfates dans les lixiviats des terres traitées montre que l'efficacité de la stabilisation augmente de manière importante avec la quantité de liant hydraulique sulfoalumineux selon l'invention utilisée pour le traitement, dès lors que le pourcentage massique de liant utilisé est supérieur ou égal à 10%. Au-delà de 10%, la stabilisation des sulfates s'améliore également mais avec une évolution plus faible.

Ces résultats sont schématisés sur le graphique de la figure annexée. Le graphique représente la variation de teneur en ions sulfates exprimée en ppm (ou mg / kg de matériau traité) dans le lixiviat (représenté sur l'axe des ordonnées), en fonction du pourcentage massique de liant hydraulique selon l'invention utilisé pour traiter le sol contaminé (représenté sur l'axe des abscisses).

**Exemple 5 : traitement avec liants hydrauliques de compositions différentes**

**Echantillon 11**

L'échantillon 11 correspond au traitement d'un échantillon de terre du port de Paris avec 20% (en masse) d'un liant hydraulique selon l'invention, ledit liant hydraulique comprenant 50% de clinker sulfo-alumineux et 50% de ciment CEM I (CEM I 52,5 N de Couvrot). La quantité d'eau utilisée dans la réalisation de cet échantillon correspond à un rapport Eau / Liant égal à 1.

**Echantillon 12**

L'échantillon 12 correspond au traitement d'un échantillon de terre du port de Paris avec 20% (en masse) d'un liant hydraulique selon l'invention, ledit liant hydraulique comprenant 90% de clinker sulfo-alumineux et 10% de CaO. La quantité d'eau utilisée dans la réalisation de cet échantillon correspond à un rapport Eau / Liant égal à 1.

Les résultats de ces deux essais sont rassemblés dans le tableau 5 et comparés à l'échantillon 9 mis en oeuvre avec la même quantité de liant hydraulique sulfo-alumineux selon l'invention à 100% de clinker A.

Tableau 5

|  | Echantillon 2 (référence) | Echantillon 11 (20% liant) | Echantillon 12 (20% liant) | Echantillon 9 (20% liant) |
|---|---|---|---|---|
| As | <0,2 | <0,2 | <0,3 | <0,2 |
| Ba | 0,471 | 0,545 | 0,615 | 1,2 |
| Cd | 0,114 | <0,1 | <0,1 | <0,1 |
| Cu | 0,253 | 0,88 | 0,627 | 0,367 |
| Hg | <0,1 | <0,001 | <0,001 | <0,002 |
| Ni | 0,127 | <0,1 | <0,1 | <0,100 |
| Pb | 0,115 | <0,350 | <0,350 | <0,350 |
| Sb | <0,2 | <0,5 | <0,5 | <0,500 |
| Se | <0,2 | <0,2 | <0,4 | <0,400 |
| Zn | 0,375 | <0,2 | <0,2 | <0,200 |
| Cl- | 68,7 | 107 | 246 | 384 |
| $SO_4^{2-}$ | 6 859 | 810 | 969 | 1287 |
| FS | 1,18 | 0,63 | 0,77 | 0,81 |

On note que la présence de CaO et/ou de ciment CEM I permet d'abaisser encore la teneur en sulfates dans le lixiviat.

### Exemple 6: Traitement avec des liants adjuvantés

### Echantillon 13

L'échantillon 13 correspond au traitement d'un échantillon de terre du port de Paris avec 20% (en masse) d'un liant hydraulique sulfo-alumineux selon l'invention renfermant 99,7% de clinker A et 0,3% de Carbonate de Lithium ($Li_3CO_2$). La quantité d'eau utilisée dans la réalisation de cet échantillon correspond à un rapport Eau / Liant égal à 1. Les résultats d'analyse du lixiviat sont présentés dans le tableau 6, en comparaison avec ceux de l'échantillon 9 traités avec la même proportion de liant hydraulique sulfo-alumineux selon l'invention.

Tableau 6

|  | Echantillon 2 (référence) | Echantillon 13 (20% liant) | Echantillon 9 (20% liant) |
|---|---|---|---|
| As | <0,2 | <0,2 | <0,2 |
| Ba | 0,471 | 1,2 | 1,2 |
| Cd | 0,114 | <0,1 | <0,1 |
| Cu | 0,253 | 0,23 | 0,367 |
| Hg | <0,1 | <0,1 | <0,002 |
| Ni | 0,127 | <0,1 | <0,100 |
| Pb | 0,115 | <0,1 | <0,350 |
| Sb | <0,2 | <0,2 | <0,500 |
| Se | <0,2 | <0,2 | <0,400 |
| Zn | 0,375 | <0,2 | <0,200 |
| Cl- | 68,7 | 401 | 384 |
| $SO_4^{2-}$ | 6 859 | 810 | 1287 |
| FS | 1,18 | 0,65 | 0,81 |

On peut noter que l'utilisation d'adjuvant tel qu'un d'accélérateur de prise à base de carbonate de lithium permet d'accroitre encore la capacité de stabilisation des sulfates du liant sulfo-alumineux, faisant passer la teneur en sulfate au dessous de 1000 ppm dans le lixiviat.

### Exemple 7 : Traitement avec des liants contenant de la chaux vive

Les échantillons 14 et 17 correspondent à l'analyse de deux lixiviats de terre du port de Paris. Ils ont subit une lixiviation dans les mêmes conditions que précédemment (échantillons 2 et 3), et constituent deux références distinctes dans cet exemple 7.

L'échantillon 15 correspond au traitement d'un échantillon de terre du port de Paris (même source que l'échantillon de référence 14) avec 6 % (en masse) d'un liant hydraulique sulfo-alumineux selon l'invention renfermant 75 % de clinker A, 25% de chaux vive. La quantité d'eau utilisée dans la réalisation de cet échantillon correspond à un rapport Eau / Liant égal à 1. Les résultats d'analyse du lixiviat sont présentés dans le tableau 7, en comparaison avec ceux des échantillons 14 et 16.

L'échantillon 16 correspond au traitement d'un échantillon de terre du port de Paris (même source que l'échantillon de référence 14) avec 4 % (en masse) d'un liant hydraulique sulfo-alumineux selon l'invention renfermant 75 % de clinker A, 25% de chaux vive. La quantité d'eau utilisée dans la réalisation de cet échantillon correspond à un rapport Eau / Liant égal à 1. Les résultats d'analyse du lixiviat sont présentés dans le tableau 7, en comparaison avec ceux des échantillons 14 et 15.

**Tableau 7**

|  | Echantillon 14 (référence) | Echantillon 15 (6 % liant) | Echantillon 16 (4 % liant) |
|---|---|---|---|
| As | <0,2 | <0,2 | <0,2 |
| Ba | 0,347 | 0,819 | 0,707 |
| Cd | <0,1 | <0,04 | <0,04 |
| Cu | 0,234 | 0,292 | 0,244 |
| Hg | 0,019 | 0,01 | 0,004 |
| Ni | <0,1 | <0,05 | <0,05 |
| Pb | <0,1 | <0,1 | <0,1 |
| Sb | 0,222 | <0,06 | <0,06 |
| Se | <0,2 | <0,08 | <0,08 |
| Zn | <0,2 | <0,05 | <0,05 |
| $Cl^-$ | 139 | 146 | 161 |
| $SO_4^{2-}$ | 4517 | 1428 | 1750 |
| FS | 0,61 | 0,65 | 0,60 |

L'échantillon 18 correspond au traitement d'un échantillon de terre du port de Paris (même source que l'échantillon de référence 17) avec 6 % (en masse) d'un liant hydraulique sulfo-alumineux selon l'invention renfermant 66,7 % de clinker A, 33,3 % de chaux vive. La quantité d'eau utilisée dans la réalisation de cet échantillon correspond à un rapport Eau / Liant égal à 1. Les résultats d'analyse du lixiviat sont présentés dans le tableau 8, en comparaison avec ceux des échantillons 17 et 19.

L'échantillon 19 correspond au traitement d'un échantillon de terre du port de Paris (même source que l'échantillon de référence 17) avec 4 % (en masse) d'un liant hydraulique sulfo-alumineux selon l'invention renfermant 50 % de clinker A, 50 % de chaux vive. La quantité d'eau utilisée dans la réalisation de cet échantillon correspond à un rapport Eau / Liant égal à 1. Les résultats d'analyse du lixiviat sont présentés dans le tableau 8, en comparaison avec ceux des échantillons 17 et 18.

**Tableau 8**

|  | Echantillon 17 (référence) | Echantillon 18 (6 % liant) | Echantillon 19 (4 % liant) |
|---|---|---|---|
| As | <0,2 | <0,2 | <0,2 |
| Ba | 0,438 | 0,821 | 0,733 |
| Cd | <0,1 | <0,04 | <0,04 |
| Cu | <0,2 | 0,557 | 0,677 |
| Hg | 0,004 | 0,004 | 0,006 |
| Ni | <0,1 | <0,05 | <0,05 |
| Pb | <0,1 | <0,1 | <0,1 |
| Sb | <0,2 | <0,06 | <0,06 |
| Se | <0,2 | <0,08 | <0,08 |
| Zn | <0,2 | <0,05 | <0,05 |
| $Cl^-$ | 181 | 209 | 172 |
| $SO_4^{2-}$ | 4696 | 730 | 691 |
| FS | 0,91 | 0,59 | 0,39 |

**Exemple 8 : Traitement avec des phases minéralogiques pures**

Les échantillons 20 à 24 correspondent à des traitements effectués avec des liants obtenus à partir de phases minéralogiques pures. C'est-à-dire que les clinkers utilisés ne proviennent pas d'un four de cimenterie mais d'un laboratoire. Ces échantillons sont comparés à l'échantillon de référence 17 décrit dans l'exemple 7.

L'échantillon 20 correspond au traitement d'un échantillon de terre du port de Paris (même source que l'échantillon de référence 17) avec 5 % (en masse) d'un liant hydraulique selon l'invention renfermant 100 % de Yeelimite (100% Y). La quantité d'eau utilisée dans la réalisation de cet échantillon correspond à un rapport Eau / Liant égal à 1. Les résultats d'analyse du lixiviat sont présentés dans le tableau 9.

L'échantillon 21 correspond au traitement d'un échantillon de terre du port de Paris (même source que l'échantillon de référence 17) avec 5 % (en masse) d'un liant hydraulique selon l'invention renfermant 60 % de Yeelimite et 40% de chaux vive (60% Y / 40% CaO). La quantité d'eau utilisée dans la réalisation de cet échantillon correspond à un rapport Eau / Liant égal à 1. Les résultats d'analyse du lixiviat sont présentés dans le tableau 9.

L'échantillon 22 correspond au traitement d'un échantillon de terre du port de Paris (même source que l'échantillon de référence 17) avec 5 % (en masse) d'un liant hydraulique selon l'invention renfermant 80 % de Yeelimite (Y) et 20% de chaux vive (80% Y / 20% CaO). La quantité d'eau utilisé dans la réalisation de cet échantillon correspond à un rapport Eau / Liant égal à 1. Les résultats d'analyse du lixiviat sont présentés dans le tableau 9.

**Tableau 9**

| | Echantillon 17 (référence) | Echantillon 20 (100% Y) | Echantillon 21 (60% Y / 40% CaO) | Echantillon 22 (80% Y / 20% CaO) |
|---|---|---|---|---|
| As | <0,2 | <0.2 | <0.2 | <0,2 |
| Ba | 0,438 | 0,443 | 0,552 | 0,637 |
| Cd | <0,1 | <0,05 | <0,05 | <0,05 |
| Cu | <0,2 | 0,159 | 0,513 | 0,170 |
| Hg | 0,004 | 0,045 | 0,093 | 0,067 |
| Ni | <0,1 | <0,05 | <0,05 | <0,05 |
| Pb | <0,1 | <0,1 | <0,1 | <0,1 |
| Sb | <0,2 | <0,1 | <0,1 | <0,1 |
| Se | <0,2 | <0,1 | <0,1 | <0,1 |
| Zn | <0,2 | <0,05 | <0,05 | <0,05 |
| Cl⁻ | 181 | 172 | 156 | 161 |
| $SO_4^{2-}$ | 4696 | 2200 | 633 | 532 |
| FS | 0,91 | 0,66 | 0,71 | 0,96 |

L'échantillon 23 correspond au traitement d'un échantillon de terre du port de Paris (même source que l'échantillon de référence 17) avec 5 % (en masse) d'un liant hydraulique selon l'invention renfermant 70 % de Yeelimite, 20% de Mayenite et 10% de chaux vive (70% Y / 20% M / 10% CaO). La quantité d'eau utilisée dans la réalisation de cet échantillon correspond à un rapport Eau / Liant égal à 1. Les résultats d'analyse du lixiviat sont présentés dans le tableau 10.

L'échantillon 24 correspond au traitement d'un échantillon de terre du port de Paris (même source que l'échantillon de référence 17) avec 5 % (en masse) d'un liant hydraulique selon l'invention renfermant 50 % de Yeelimite, 20% de Mayenite et 30% de chaux vive (50% Y / 20% M / 30% CaO). La quantité d'eau utilisée dans la réalisation de cet échantillon correspond à un rapport Eau / Liant égal à 1. Les résultats d'analyse du lixiviat sont présentés dans le tableau 10.

**Tableau 10**

| | Echantillon 17 (référence) | Echantillon 23 (70% Y / 20% M / 10% CaO) | Echantillon 24 (50% Y / 20% M / 30% CaO) |
|---|---|---|---|
| As | <0,2 | <0.2 | <0,2 |

(suite)

| | Echantillon 17 (référence) | Echantillon 23 (70% Y / 20% M / 10% CaO) | Echantillon 24 (50% Y / 20% M / 30% CaO) |
|---|---|---|---|
| Ba | 0,438 | 0,763 | 0,552 |
| Cd | <0,1 | <0,05 | <0,04 |
| Cu | <0,2 | 0,142 | 0,296 |
| Hg | 0,004 | 0,007 | 0,022 |
| Ni | <0,1 | <0,05 | <0,05 |
| Pb | <0,1 | <0,1 | <0,1 |
| Sb | <0,2 | <0,1 | <0,06 |
| Se | <0,2 | <0,1 | <0,08 |
| Zn | <0,2 | <0,05 | <0,05 |
| Cl⁻ | 181 | 143 | 142 |
| $SO_4^{2-}$ | 4696 | 389 | 592 |
| FS | 0,91 | 1,05 | 0,9 |

## Revendications

1. Procédé de traitement de sols pollués, notamment de sols présentant une fraction lixiviable supérieure à 0,4%, ladite fraction lixiviable renfermant majoritairement des anions, notamment des ions sulfate, et/ou des métaux lourds, **caractérisé en ce qu'**il comprend le mélange dudit sol avec un liant hydraulique à base de clinker sulfoalumineux, dans des proportions massiques sol/liant comprises entre 1 et 40 parties de liant pour 100 parties de sol, ledit clinker sulfoalumineux renfermant plus de 50% massique de phase Yeelimite $C_4A_3\$$, moins de 15% massique de phase Bélite $C_2S$, et de 1 à 5% massique de chaux libre CaO.

2. Procédé de traitement selon la revendication 1, **caractérisé en ce que** le clinker sulfo-alumineux renferme plus de 60% massique de phase Yeelimite $C_4A_3\$$.

3. Procédé de traitement selon la revendication 1 ou 2, **caractérisé en ce que** le clinker sulfo-alumineux renferme de 5% à moins de 15%, de préférence de 8 à 13% massique de phase Bélite $C_2S$.

4. Procédé de traitement selon l'une des revendications 1 à 3, **caractérisé en ce que** le clinker sulfo-alumineux renferme de 2 à 12%, préférentiellement de 2 à 3% massique de phase Mayenite $C_{12}A_7$, ou d'un isotype de Mayenite.

5. Procédé de traitement selon l'une quelconque des revendications précédentes, **caractérisé en ce qu'**il comprend le mélange dudit sol avec le liant hydraulique, dans des proportions massiques sol/liant comprises entre 1 et 20 parties, de préférence de 2 à 20 parties, de liant pour 100 parties de sol.

6. Procédé de traitement selon la revendication 5, **caractérisé en ce qu'**il comprend le mélange dudit sol avec le liant hydraulique, dans des proportions massiques sol/liant comprises entre 5 et 20 parties, de préférence de 5 à 10 parties, de liant pour 100 parties de sol.

7. Procédé de traitement selon l'une quelconque des revendications précédentes, **caractérisé en ce que** le liant hydraulique est constitué d'un clinker sulfo-alumineux renfermant plus de 50% massique de phase Yeelimite $C_4A_3\$$, moins de 15% massique de phase Bélite $C_2S$, et de 1 à 5% massique de chaux libre CaO.

8. Procédé selon l'une quelconque des revendications précédentes,

**caractérisé en ce que** ledit liant hydraulique ne renferme pas d'accélérateur de prise.

9. Procédé selon l'une quelconque des revendications précédentes,
**caractérisé en ce que** ledit liant hydraulique renferme au moins 20%, de préférence au moins 30%, massique dudit clinker sulfoalumineux et un ou plusieurs composés choisis parmi du ciment, du clinker Portland, de la chaux, un filler, des additions à effet pouzzolanique telles que du laitier, de la cendre volante, de la fumée de silice ou de la pouzzolane, et éventuellement un ou plusieurs adjuvants, tel qu'un accélérateur de prise ou un réducteur de Chrome.

10. Procédé selon la revendication 9,
**caractérisé en ce que** ledit liant hydraulique renferme de la chaux vive, de préférence en une quantité inférieure à 50% massique.

11. Utilisation du procédé selon l'une quelconque des revendications précédentes pour la stabilisation de sols *in situ* ou avant mise en décharge, de sols pollués notamment par des anions sulfate et/ou des cations de métaux lourds.

12. Utilisation du procédé selon la revendication 11 pour la stabilisation de sol renfermant une teneur en eau inférieure à 40%, de préférence inférieure à 30% massique.

13. Utilisation du sol traité par le procédé selon l'une quelconque des revendications 1 à 10, dans des sous-couches routières ou des remblais.


**Patentansprüche**

1. Behandlungsverfahren verunreinigter Böden, vor allem von Böden, die eine auslaugbare Fraktion über 0,4 % aufweisen, wobei die auslaugbare Fraktion mehrheitlich Anionen, vor allem Sulfationen, und/oder Schwermetalle einschließt,
**dadurch gekennzeichnet, dass** es das Mischen des Bodens mit einem hydraulischen Bindemittel auf der Basis von Sulfoaluminatklinker in Boden/Bindemittel-Massenverhältnissen zwischen inklusive 1 und 40 Teilen Bindemittel auf 100 Teile Boden umfasst, wobei der Sulfoaluminatklinker über 50 Ma% Yeelimitphase $C_4A_3\$$, unter 15 Ma% Belitphase $C_2S$ und 1 bis 5 Ma% Freikalk $CaO$ einschließt.

2. Behandlungsverfahren nach Anspruch 1,
**dadurch gekennzeichnet, dass** der Sulfoaluminatklinker über 60 Ma% Yeelimitphase $C_4A_3\$$ einschließt.

3. Behandlungsverfahren nach Anspruch 1 oder 2,
**dadurch gekennzeichnet, dass** der Sulfoaluminatklinker 5 Ma% bis unter 15 Ma%, vorzugsweise 8 bis 13 Ma% Belitphase $C_2S$ einschließt.

4. Behandlungsverfahren nach einem der Ansprüche 1 bis 3,
**dadurch gekennzeichnet, dass** der Sulfoaluminatklinker 2 bis 12 Ma%, vorzugsweise 2 bis 3 Ma% Mayenitphase $Ci_2A_7$ oder eines Mayenitisotops einschließt.

5. Behandlungsverfahren nach einem der vorangehenden Ansprüche,
**dadurch gekennzeichnet, dass** es das Mischen des Bodens mit dem hydraulischen Bindemittel in Boden/Bindemittel-Massenverhältnissen zwischen 1 und 20 Teilen, vorzugsweise von 2 bis 20 Teilen, inklusive, Bindemittel auf 100 Teile Boden umfasst.

6. Behandlungsverfahren nach Anspruch 5,
**dadurch gekennzeichnet, dass** es das Mischen des Bodens mit dem hydraulischen Bindemittel in Boden/Bindemittel-Massenverhältnissen zwischen 5 und 20 Teilen, vorzugsweise von 5 bis 10 Teilen, inklusive, Bindemittel auf 100 Teile Boden umfasst.

7. Behandlungsverfahren nach einem der vorangehenden Ansprüche,
**dadurch gekennzeichnet, dass** das hydraulische Bindemittel von einem Sulfoaluminatklinker gebildet ist, der über 50 Ma% Yeelimitphase $C_4A_3\$$, unter 15 Ma% Belitphase $C_2S$ und 1 bis 5 Ma% Freikalk $CaO$ einschließt.

8. Verfahren nach einem der vorangehenden Ansprüche,

**dadurch gekennzeichnet, dass** das hydraulische Bindemittel keinen Abbindebeschleuniger einschließt.

9.  Verfahren nach einem der vorangehenden Ansprüche,
    **dadurch gekennzeichnet, dass** das hydraulische Bindemittel mindestens 20 Ma%, vorzugsweise mindestens 30 Ma%, des Sulfoaluminatklinkers und eine oder mehrere Verbindungen einschließt, die aus Zement, Portland-Klinker, Kalk, einem Filler, Zuschlägen mit puzzolanischer Wirkung wie Schlacke, Flugasche, Silikat- oder Puzzolanstaub und eventuell einen oder mehrere Zuschlagstoffe wie ein Abbindebeschleuniger oder ein Chromreduzierer einschließt.

10. Verfahren nach Anspruch 9,
    **dadurch gekennzeichnet, dass** das hydraulische Bindemittel ungelöschten Kalk vorzugsweise in einer Menge unter 50 Ma% einschließt.

11. Verwendung des Verfahrens nach einem der vorangehenden Ansprüche für die Stabilisierung von Böden *in situ* oder vor der Verbringung auf die Deponie von Böden, die vor allem mit Sulfatanionen und/oder Schwermetallkationen verunreinigt sind.

12. Verwendung des Verfahrens nach Anspruch 11 für die Stabilisierung von Boden mit einem Wassergehalt unter 40 Ma%, vorzugsweise unter 30 Ma%.

13. Verwendung des mit dem Verfahren nach einem der Ansprüche 1 bis 10 behandelten Bodens in Unterschichten von Straßen oder in Aufschüttungen.

**Claims**

1.  A process for the treatment of polluted soils, in particular of soils exhibiting a leachable fraction of greater than 0.4%, said leachable fraction predominantly including anions, in particular sulfate ions, and/or heavy metals, **characterized in that** it comprises the mixing of said soil with a hydraulic binder based on sulfoaluminate clinker in soil/binder proportions by weight of between 1 and 40 parts of binder per 100 parts of soil, said sulfoaluminate clinker including more than 50% by weight of ye'elimite $C_4A_3\$$ phase, less than 15% by weight of belite $C_2S$ phase and from 1% to 5% by weight of free lime CaO.

2.  The treatment process as claimed in claim 1, **characterized in that** the sulfoaluminate clinker includes more than 60% by weight of ye'elimite $C_4A_3\$$ phase.

3.  The treatment process as claimed in claim 1 or 2, **characterized in that** the sulfoaluminate clinker includes from 5% to less than 15%, preferably from 8% to 13%, by weight of belite $C_2S$ phase.

4.  The treatment process as claimed in one of claims 1 to 3,
    **characterized in that** the sulfoaluminate clinker includes from 2% to 12%, preferably from 2% to 3%, by weight of mayenite $C_{12}A_7$ phase or of a mayenite isotype.

5.  The treatment process as claimed in any one of the preceding claims,
    **characterized in that** it comprises the mixing of said soil with the hydraulic binder in soil/binder proportions by weight of between 1 and 20 parts, preferably from 2 to 20 parts, of binder per 100 parts of soil.

6.  The treatment process as claimed in claim 5,
    **characterized in that** it comprises the mixing of said soil with the hydraulic binder in soil/binder proportions by weight of between 5 and 20 parts, preferably from 5 to 10 parts, of binder per 100 parts of soil.

7.  The treatment process as claimed in any one of the preceding claims,
    **characterized in that** the hydraulic binder is composed of a sulfoaluminate clinker including more than 50% by weight of ye'elimite $C_4A_3\$$ phase, less than 15% by weight of belite $C_2S$ phase and from 1% to 5% by weight of free lime CaO.

8.  The process as claimed in any one of the preceding claims,
    **characterized in that** said hydraulic binder does not include a setting accelerator.

9. The process as claimed in any one of the preceding claims,
**characterized in that** said hydraulic binder includes at least 20%, preferably at least 30%, by weight of said sulfoaluminate clinker and one or more compounds chosen from cement, Portland clinker, lime, a filler, admixtures having a pozzolanic effect, such as slag, fly ash, silica fume or pozzolana, and optionally one or more additives, such as a setting accelerator or a chromium reducer.

10. The process as claimed in claim 9,
**characterized in that** said hydraulic binder includes quick lime, preferably in an amount of less than 50% by weight.

11. The use of the process as claimed in any one of the preceding claims in the stabilization of soils *in situ* or before landfilling, which soils are polluted in particular by sulfate anions and/or heavy metal cations.

12. The use of the process as claimed in claim 11 in the stabilization of soil including a water content of less than 40%, preferably of less than 30%, by weight.

13. The use of the soil treated by the process as claimed in any one of claims 1 to 10 in road bases or backfills.

**FIGURE UNIQUE**

## RÉFÉRENCES CITÉES DANS LA DESCRIPTION

**Documents brevets cités dans la description**

- EP 0588689 A
- WO 2010043495 A
- EP 2011070116 W

**Littérature non-brevet citée dans la description**

- Acceptabilité de matériaux alternatifs en technique routière. *Evaluation environnementale,* Mars 2011
- *Inercem Liants hydrauliques pour stabilisation des déchets courants,* Février 2009